# EUROPEAN PATENT APPLICATION

(11) **EP 4 838 670 A1**
(43) Date of publication of application: **11.11.2026**
(21) Application number: 25774166.0
(22) Date of filing: 19.03.2025
(51) Int. Cl.: H01M 50/443, H01M 50/414, H01M 50/417, H01M 50/42, H01M 50/423, H01M 50/426, H01M 50/434, H01M 50/451, H01M 50/457, H01M 50/489

(54) **SEPARATOR FOR NONAQUEOUS SECONDARY BATTERY, AND NONAQUEOUS SECONDARY BATTERY**

(30) Priority: 21.03.2024 JP 2024045643
(71) Applicant: TEIJIN LIMITED, Kita-ku, Osaka-shi, Osaka 530-0005 (JP)
(72) Inventor: OKAZAKI, Masato, Osaka-shi, Osaka 530-0005 (JP); ONOUE, Shuhei, Osaka-shi, Osaka 530-0005 (JP)
(74) Representative: Berggren Oy
(86) International application number: PCT/JP2025/010868
(87) International publication number: WO 2025/197990

(57) **Abstract**

A separator for a non-aqueous secondary battery includes: a porous substrate; a heat-resistant porous layer disposed on one surface or both surfaces of the porous substrate and containing inorganic particles and a binder resin; and an adhesive layer disposed on one surface or both surfaces of a laminate including the porous substrate and the heat-resistant porous layer and containing adhesive resin particles, in which the heat-resistant porous layer has an average pore diameter X of 50 nm to 300 nm, and the adhesive resin particles have an average primary particle diameter Y of 100 nm to 900 nm.

## Description

### Technical Field

The present disclosure relates to a separator for a non-aqueous secondary battery and a non-aqueous secondary battery.

### Background Art

Patent Literature 1 discloses a separator for a non-aqueous secondary battery including: a porous substrate; a heat-resistant porous layer containing an aromatic resin and inorganic particles; and an adhesive layer formed by adhering adhesive resin particles to the heat-resistant porous layer.

Patent Literature 2 discloses a separator for a non-aqueous secondary battery including: a porous substrate; a heat-resistant porous layer provided on one surface or both surfaces of the porous substrate and containing at least one of inorganic particles and a heat-resistant resin having at least one of an amide bond and an imide bond in the molecule; and an adhesive layer provided on one surface or both surfaces of a laminate including the porous substrate and the heat-resistant porous layer and containing adhesive resin particles adhering to the laminate.

### Citation List

### Patent Literature

Patent Literature 1: JP2023-164113A
Patent Literature 2: WO2019/130994

### Summary of Invention

### Technical Problem

There is known a separator for a non-aqueous secondary battery including, on a porous substrate, a heat-resistant porous layer and an adhesive layer containing adhesive resin particles. The separator is bonded to an electrode by adhesiveness of the adhesive resin particles, and a substance can pass from one surface to the other surface through a gap present between the adhesive resin particles and a gap present at an interface between the adhesive layer and the heat-resistant porous layer. Some of the separators have a poor balance among adhesiveness to the electrode, permeability of an electrolyte solution, and ion permeability.

The present disclosure has been made under the above circumstances.

An object of the present disclosure is to provide a separator for a non-aqueous secondary battery having excellent adhesiveness to an electrode, permeability of an electrolyte solution, and ion permeability.

### Solution to Problem

Specific means for solving the above problems include the following aspects.
<1> A separator for a non-aqueous secondary battery including:
   a porous substrate;
   a heat-resistant porous layer disposed on one surface or both surfaces of the porous substrate and containing inorganic particles and a binder resin; and
   an adhesive layer disposed on one surface or both surfaces of a laminate including the porous substrate and the heat-resistant porous layer and containing adhesive resin particles, in which
   the heat-resistant porous layer has an average pore diameter X of 50 nm to 300 nm, and
   the adhesive resin particles have an average primary particle diameter Y of 100 nm to 900 nm.
<2> The separator for a non-aqueous secondary battery according to <1>, in which a ratio Y/X of the average primary particle diameter Y to the average pore diameter X is 2 to 10.
<3> The separator for a non-aqueous secondary battery according to <1> or <2>, in which a coverage on a surface of the separator for a non-aqueous secondary battery with the adhesive resin particles is 10% to 80% on each of surfaces on which the adhesive layer is disposed.
<4> The separator for a non-aqueous secondary battery according to any one of <1> to <3>, in which the inorganic particles include at least one selected from the group consisting of metal oxide particles, metal hydroxide particles, and metal sulfate particles.
<5> The separator for a non-aqueous secondary battery according to any one of <1> to <4>, in which the binder resin includes at least one selected from the group consisting of a wholly aromatic polyamide, a polyimide, a polyamideimide, a fluorine-based resin, and an acrylic resin.
<6> The separator for a non-aqueous secondary battery according to any one of <1> to <5>, in which the adhesive resin particles include at least one selected from the group consisting of acrylic resin particles, polyvinylidene fluoride-based resin particles, and styrene-butadiene rubber particles.
<7> The separator for a non-aqueous secondary battery according to any one of <1> to <6>, in which the porous substrate has an average pore diameter of 50 nm to 140 nm.
<8> The separator for a non-aqueous secondary battery according to any one of <1> to <7>, in which the porous substrate is a polyolefin microporous film.
<9> A non-aqueous secondary battery that obtains an electromotive force by doping and de-doping a lithium ion, the non-aqueous secondary battery including:
   a positive electrode;
   a negative electrode; and
   the separator for a non-aqueous secondary battery according to any one of <1> to <8> disposed between the positive electrode and the negative electrode.

### Advantageous Effects of Invention

According to the present disclosure, there is provided a separator for a non-aqueous secondary battery having excellent adhesiveness to an electrode, permeability of an electrolyte solution, and ion permeability.

### Brief Description of Drawings

[FIG. 1] FIG. 1 is a schematic cross-sectional view of an example of a separator according to the present disclosure.
[FIG. 2] FIG. 2 is a schematic cross-sectional view of an example of the separator according to the present disclosure.
[FIG. 3] FIG. 3 is a schematic cross-sectional view of an example of the separator according to the present disclosure.
[FIG. 4] FIG. 4 is a schematic cross-sectional view of an example of the separator according to the present disclosure.
[FIG. 5] FIG. 5 is a schematic cross-sectional view of an example of the separator according to the present disclosure.

### Description of Embodiments

Hereinafter, embodiments of the present disclosure will be described. These descriptions and examples are illustrative of embodiments and do not limit the scope of the embodiments.

In the present disclosure, a numerical range indicated using "to" indicates a range including numerical values described before and after "to" as a minimum value and a maximum value, respectively.

In a numerical range described stepwise in the present disclosure, an upper limit value or a lower limit value described in one numerical range may be replaced with an upper limit value or a lower limit value of another numerical range described in a stepwise manner. In addition, in the numerical range described in the present disclosure, the upper limit value or the lower limit value of the numerical range may be replaced with a value shown in Examples.

In the present disclosure, "A and/or B" is synonymous with "at least one of A and B". That is, "A and/or B" means that it may be only A, may be only B, or may be a combination of A and B.

In the present disclosure, the term "step" includes not only an independent step but also a step that cannot be clearly distinguished from other steps as long as the purpose of the step is achieved.

In the present disclosure, in the case of referring to an amount of each component in a composition, when there are a plurality of substances corresponding to each component in the composition, the amount means a total amount of the plurality of substances present in the composition unless otherwise specified.

In the present disclosure, a plurality of kinds of particles corresponding to each component may be contained. When there are a plurality of kinds of particles corresponding to each component in the composition, a particle diameter of each component means a value of a mixture of the plurality of kinds of particles present in the composition unless otherwise specified.

In the present disclosure, MD (machine direction) means a longitudinal direction of a separator produced in a long shape, and TD (transverse direction) means a direction orthogonal to MD in a surface direction of the separator. In the present disclosure, TD is also referred to as a "width direction".

In the present disclosure, when a lamination relationship of layers constituting the separator is expressed by "upper" and "lower", the layer closer to a porous substrate is referred to as "lower", and the layer farther from the porous substrate is referred to as "upper".

In the present disclosure, a volume of the porous layer excluding pores is referred to as a "solid content volume".

In the present disclosure, performing a hot press treatment after impregnating the separator with an electrolyte solution is referred to as "wet heat press", and performing a hot press treatment without impregnating the separator with an electrolyte solution is referred to as "dry heat press".

In the present disclosure, the expression "(meth)acryl" means either "acryl" or "methacryl".

In the present disclosure, a "monomer unit" of a polymer or a resin means a constituent unit of the polymer or the resin which is obtained by polymerizing a monomer.

### <Separator for Non-aqueous Secondary Battery>

A separator for a non-aqueous secondary battery according to the present disclosure (also simply referred to as a "separator" in the present disclosure) includes a porous substrate, a heat-resistant porous layer disposed on one surface or both surfaces of the porous substrate and containing inorganic particles and a binder resin, and an adhesive layer disposed on one surface or both surfaces of a laminate including the porous substrate and the heat-resistant porous layer and containing adhesive resin particles.

A layer configuration of the separator according to the present disclosure will be described with reference to the drawings.

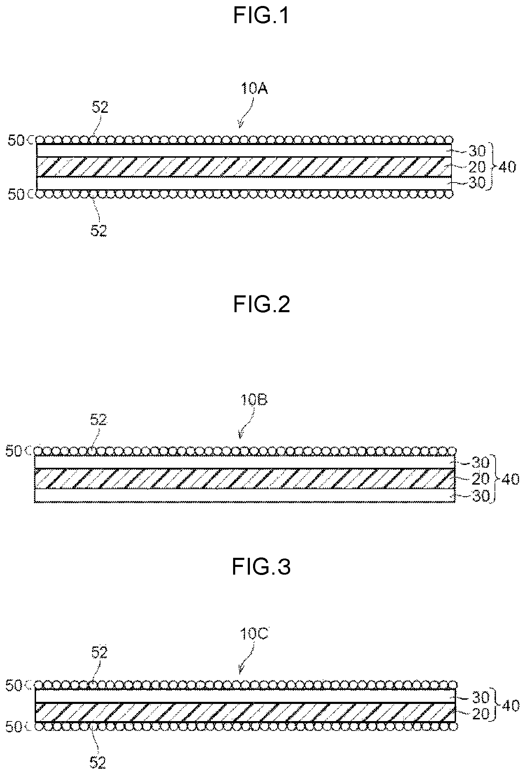

Each of FIG. 1 to FIG. 5 is a schematic cross-sectional view of an embodiment example of the separator according to the present disclosure. FIG. 1 to FIG. 5 are schematic cross-sectional views mainly illustrating a lamination order of layers, and a structure of each layer is abstracted or simplified. In FIG. 1 to FIG. 5, layers having similar functions are denoted by the same reference numerals.

A separator 10A shown in FIG. 1 is a separator in which a heat-resistant porous layer 30 is disposed on both surfaces of a porous substrate 20 and an adhesive layer 50 is disposed on both surfaces of a laminate 40 including the porous substrate 20 and two heat-resistant porous layers 30. Components and/or compositions in one heat-resistant porous layer 30 and the other heat-resistant porous layer 30 may be the same as or different from each other. Components and/or compositions of one adhesive layer 50 and the other adhesive layer 50 may be the same as or different from each other.

A separator 10B shown in FIG. 2 is a separator in which the heat-resistant porous layer 30 is disposed on both surfaces of the porous substrate 20 and the adhesive layer 50 is disposed on one surface of the laminate 40 including the porous substrate 20 and two heat-resistant porous layers 30. Components and/or compositions in one heat-resistant porous layer 30 and the other heat-resistant porous layer 30 may be the same as or different from each other.

A separator 10C shown in FIG. 3 is a separator in which the heat-resistant porous layer 30 is disposed on one surface of the porous substrate 20 and the adhesive layer 50 is disposed on both surfaces of the laminate 40 including the porous substrate 20 and one heat-resistant porous layer 30. Components and/or compositions of one adhesive layer 50 and the other adhesive layer 50 may be the same as or different from each other.

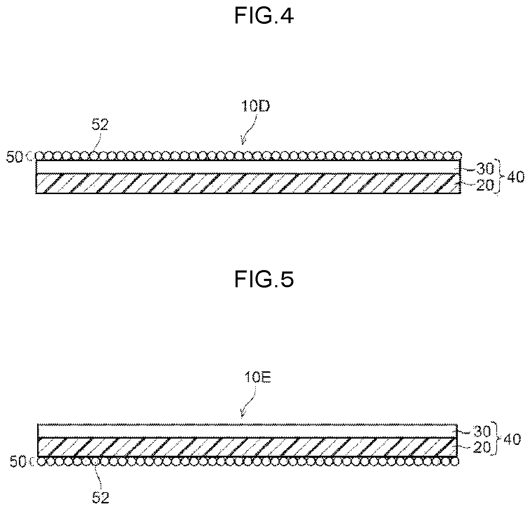

A separator 10D shown in FIG. 4 is a separator in which the heat-resistant porous layer 30 is disposed on one surface of the porous substrate 20 and the adhesive layer 50 is disposed on one surface of the laminate 40 including the porous substrate 20 and one heat-resistant porous layer 30. In the separator 10D, the adhesive layer 50 is disposed on the surface of the heat-resistant porous layer 30.

A separator 10E shown in FIG. 5 is a separator in which the heat-resistant porous layer 30 is disposed on one surface of the porous substrate 20 and the adhesive layer 50 is disposed on one surface of the laminate 40 including the porous substrate 20 and one heat-resistant porous layer 30. In the separator 10E, the adhesive layer 50 is disposed on the surface of the porous substrate 20.

The heat-resistant porous layer 30 is a layer containing inorganic particles and a binder resin, and is a layer disposed on the surface of the porous substrate 20. The heat-resistant porous layer 30 may be provided only on one surface of the porous substrate 20 or may be provided on both surfaces of the porous substrate 20. When the heat-resistant porous layer 30 is provided on both surfaces of the porous substrate 20, heat resistance of the separator is more excellent, and safety of a battery can be further improved. In addition, the separator is less likely to curl and has excellent handleability during production of the battery. When the heat-resistant porous layer 30 is provided only on one surface of the porous substrate 20, ion permeability of the separator is more excellent. In addition, a thickness of the entire separator can be reduced, and a battery having a higher energy density can be produced.

The adhesive layer 50 is a layer disposed on the surface of the porous substrate 20 or the heat-resistant porous layer 30 and is present as the outermost layer of the separator. The adhesive layer 50 may be provided only on one surface of the laminate 40 or on both surfaces of the laminate 40. When the adhesive layer 50 is provided only on one surface of the laminate 40, the adhesive layer 50 is preferably disposed on the surface of the heat-resistant porous layer 30. The adhesive layer 50 may be selected to be disposed on one surface or both surfaces of the laminate 40 in accordance with a composition or surface properties of a positive electrode or a negative electrode of the battery. When the adhesive layer 50 is provided only on one surface of the laminate 40, the thickness of the entire separator can be reduced, and a battery having a higher energy density can be produced.

The adhesive layer 50 is a layer containing adhesive resin particles 52. The adhesive layer 50 may be a layer in which the adhesive resin particles 52 adhere to the laminate 40 due to own properties thereof, or may be a layer in which the adhesive resin particles 52 are bound to the laminate 40 with another resin.

The adhesive layer 50 preferably has a structure in which the adhesive resin particles 52 are arranged adjacent to each other on the surface of the laminate 40 from the viewpoint of excellent adhesiveness to the electrode. The adhesive layer 50 preferably has a structure in which the adhesive resin particles 52 are scattered on the surface of the laminate 40 from the viewpoint of permeability of an electrolyte solution into the separator. The adhesive layer 50 preferably has a structure in which the adhesive resin particles 52 have one layer in a thickness direction from the viewpoint of increasing the energy density of the battery. The adhesive layer 50 may have a structure in which a plurality of layers of adhesive resin particles 52 are laminated in the thickness direction.

In the separator in a state of being bonded to the electrode, some or all of the adhesive resin particles 52 contained in the adhesive layer 50 are melted by heat application for bonding the separator to the electrode, adjacent adhesive resin particles 52 are connected to each other, and some or all of the adhesive resin particles 52 do not retain a particle shape in some cases.

In the separator according to the present disclosure, the heat-resistant porous layer has an average pore diameter X of 50 nm to 300 nm, and the adhesive resin particles have an average primary particle diameter Y of 100 nm to 900 nm.

With the configuration described above, the separator according to the present disclosure has excellent adhesiveness to the electrode, permeability of the electrolyte solution, and ion permeability.

When the average pore diameter X of the heat-resistant porous layer is more than 300 nm, the adhesive resin particles are embedded in pores of the heat-resistant porous layer, and as a result, adhesion between the separator and the electrode is insufficient and/or the permeation of the electrolyte solution into the separator is insufficient in some cases. The average pore diameter X of the heat-resistant porous layer is 300 nm or less, preferably 250 nm or less, and more preferably 200 nm or less, from the viewpoint that the separator has excellent adhesiveness to the electrode and permeability of the electrolyte solution.

When the average pore diameter X of the heat-resistant porous layer is less than 50 nm, ion permeation may be insufficient. The average pore diameter X of the heat-resistant porous layer is 50 nm or more, preferably 100 nm or more, and more preferably 150 nm or more, from the viewpoint that the separator has excellent ion permeability.

When the average primary particle diameter Y of the adhesive resin particles is less than 100 nm, the adhesive resin particles are embedded in the pores of the heat-resistant porous layer, and the adhesion between the separator and the electrode is insufficient and/or the permeation of the electrolyte solution into the separator is insufficient in some cases. The average primary particle diameter Y of the adhesive resin particles is 100 nm or more, preferably 200 nm or more, and more preferably 400 nm or more, from the viewpoint that the separator has excellent adhesiveness to the electrode and permeability of the electrolyte solution.

When the average primary particle diameter Y of the adhesive resin particles is more than 900 nm, the ion permeation may be insufficient. The average primary particle diameter Y of the adhesive resin particles is 900 nm or less, preferably 700 nm or less, and more preferably 600 nm or less, from the viewpoint that the separator has excellent ion permeability.

In the separator according to the present disclosure, a ratio Y/X of the average primary particle diameter Y of the adhesive resin particles to the average pore diameter X of the heat-resistant porous layer is preferably 2 to 10.

When the ratio Y/X is 2 or more, the adhesive resin particles are less likely to be embedded in the pores of the heat-resistant porous layer, and as a result, the separator has excellent adhesiveness to the electrode and permeability of the electrolyte solution. From this viewpoint, the ratio Y/X is more preferably 3 or more, and still more preferably 4 or more.

When the ratio Y/X is 10 or less, the separator has excellent ion permeability, and from this viewpoint, the ratio Y/X is preferably 9 or less, and more preferably 8 or less.

The average pore diameter X (nm) of the heat-resistant porous layer is calculated according to the following equation, assuming that all pores are cylindrical. $X = 4 V / S$

Here, X is the average pore diameter of the heat-resistant porous layer, V is a pore volume per 1 m² of the heat-resistant porous layer, and S is a pore surface area per 1 m² of the heat-resistant porous layer.

The pore volume V per 1 m² of the heat-resistant porous layer is calculated based on a porosity of the heat-resistant porous layer. The porosity of the heat-resistant porous layer is determined as to be described later.

The pore surface area S per 1 m² of the heat-resistant porous layer is determined by using the following method.

First, a specific surface area (m²/g) of the porous substrate and a specific surface area (m²/g) of the separator are calculated based on a nitrogen gas adsorption amount by applying a BET formula to a nitrogen gas adsorption method. The specific surface area (m²/g) is multiplied by the corresponding mass (g/m²) per unit area to calculate the corresponding pore surface area per 1 m². Then, the pore surface area per 1 m² of the porous substrate is subtracted from the pore surface area per 1 m² of the separator to calculate the pore surface area S per 1 m² of the heat-resistant porous layer.

The average pore diameter X of the heat-resistant porous layer can be controlled based on a composition of a solvent constituting a coating liquid for forming the heat-resistant porous layer (for example, a mixing ratio of a resin as a good solvent and a phase separation agent). In addition, the average pore diameter X of the heat-resistant porous layer can be controlled based on a primary particle diameter and a content of the inorganic particles contained in the heat-resistant porous layer.

The average primary particle diameter Y (nm) of the adhesive resin particles is determined by measuring major diameters of 100 adhesive resin particles randomly selected in observation using a scanning electron microscope (SEM) and averaging the major diameters of the 100 particles. A sample subjected to the SEM observation is adhesive resin particles as a material for forming the adhesive layer or adhesive resin particles extracted from the adhesive layer.

Hereinafter, details of the porous substrate, the heat-resistant porous layer, and the adhesive layer of the separator according to the present disclosure will be described.

### [Porous Substrate]

In the present disclosure, the porous substrate means a substrate having pores or voids therein.

Examples of the porous substrate include: a microporous film; a porous sheet composed of a fibrous material; and a composite porous sheet in which one or more other porous layers are laminated on a microporous film or a porous sheet.

As the porous substrate, a microporous film is preferred from the viewpoint of thinning and strength of the separator. The microporous film means a film having a large number of micropores therein, having a structure in which the micropores are connected to each other and allowing a gas or a liquid to pass from one surface to the other surface.

A material of the porous substrate is preferably an electrically insulating material.

The porous substrate preferably contains a thermoplastic resin, in order to impart a shutdown function to the porous substrate. The shutdown function refers to a function of dissolving a constituent material to clog the pores of the porous substrate, thereby blocking ion migration and preventing thermal runaway of the battery, when a battery temperature is raised. The thermoplastic resin is preferably a thermoplastic resin having a melting point lower than 200°C. Examples of the thermoplastic resin include a polyester such as polyethylene terephthalate, and a polyolefin such as a polyethylene and a polypropylene, and a polyolefin is preferred.

The porous substrate is preferably a polyolefin microporous film. In the present disclosure, the polyolefin microporous film means a microporous film containing a polyolefin.

The polyolefin microporous film may be a microporous film composed of only a polyolefin, or a microporous film composed of a polyolefin and a material other than the polyolefin (for example, a resin such as an acrylic resin, a styrene-based resin, or a butadiene rubber).

In the polyolefin microporous film, preferably 95 mass% or more in a total mass is a polyolefin, and more preferably 99 mass% or more in the total mass is a polyolefin.

Examples of the polyolefin microporous film include polyolefin microporous films applicable to a separator for a battery in the related art, and among these, one having sufficient mechanical properties and ion permeability is preferably selected.

From the viewpoint of exhibiting the shutdown function, the polyolefin microporous film is preferably a microporous film containing a polyethylene, and the polyethylene is preferably 95 mass% or more in the total mass of the polyolefin microporous film.

In the present disclosure, a microporous film in which the resin having the largest mass proportion in all resins constituting the microporous film is a polyethylene is referred to as a polyethylene microporous film.

The polyolefin microporous film is preferably a microporous film containing a polypropylene from the viewpoint of imparting the heat resistance to the extent that the film is less likely to break when exposed to a high temperature.

The polyolefin microporous film is preferably a polyolefin microporous film containing a polyethylene and a polypropylene, from the viewpoint of imparting the shutdown function and the heat resistance to the extent that the film is less likely to break when exposed to a high temperature.

Examples of the polyolefin microporous film containing a polyethylene and a polypropylene include a microporous film in which a polyethylene and a polypropylene are mixed in one layer. The microporous film preferably contains 95 mass% or more of the polyethylene and 5 mass% or less of the polypropylene, from the viewpoint of achieving both the shutdown function and the heat resistance.

Another example of the polyolefin microporous film containing a polyethylene and a polypropylene is a polyolefin microporous film having a laminated structure of two or more layers, at least one layer containing a polyethylene, and at least one layer containing a polypropylene.

The polyolefin contained in the polyolefin microporous film is preferably a polyolefin having a weight-average molecular weight (Mw) of 100,000 to 5,000,000. When the Mw of the polyolefin is 100,000 or more, sufficient mechanical properties can be imparted to the microporous film. When the Mw of the polyolefin is 5,000,000 or less, shutdown properties of the microporous film is favorable, and the microporous film is likely to mold.

The weight-average molecular weight of the polyolefin constituting the polyolefin microporous film is determined by heating and dissolving the polyolefin microporous film in o-dichlorobenzene and performing measurement using gel permeation chromatography (GPC). A polystyrene is used for calibration of the molecular weight.

Examples of a method for producing the polyolefin microporous film include: a method of extruding a molten polyolefin from a T-die to form a sheet, crystallizing and then stretching the sheet, and then subjecting the stretched sheet to a heat treatment, thereby obtaining a microporous film; and a method of extruding a polyolefin melted with a plasticizer such as liquid paraffin from a T-die, performing cooling to form a sheet, stretching the sheet, then extracting the plasticizer, and subjecting the stretched sheet to a heat treatment, thereby obtaining a microporous film.

Form examples of the polyolefin microporous film include a form in which a resin is contained in pores. The resin is a binder resin of the heat-resistant porous layer, and is a resin that enters the pores of the polyolefin microporous film and that remains when the heat-resistant porous layer is formed.

The resin is preferably a resin having a hydrophilic group from the viewpoint of easily permeating the electrolyte solution into the polyolefin microporous film. Examples of the resin having a hydrophilic group include a resin having at least one of an amide bond and an imide bond in the molecule. In the present disclosure, a resin having at least one of an amide bond and an imide bond in the molecule is referred to as a "resin (AI)". Examples of the resin (AI) include a polyamide, a polyimide, and a polyamideimide.

Form examples of the polyolefin microporous film having the resin (AI) in the pores include: a polyolefin microporous film having the resin (AI) in pores in a region close to the surface of the microporous film; and a polyolefin microporous film having the resin (AI) in pores of the entire microporous film.

Form examples of the resin (AI) in the pores include: a form in which some or all of wall surfaces of the pores are coated with the resin (AI); a form in which a fibrous resin (AI) is contained in the pores; and a combination thereof. The resin (AI) in the pores is preferably in these forms from the viewpoint of easily permeating the electrolyte solution into the polyolefin microporous film.

The incorporation of the resin (AI) in the pores of the polyolefin microporous film can be checked by element imaging in which energy dispersive X-ray spectroscopy is combined with a transmission electron microscope. Using the fact that the resin (AI) is easily dyeable with respect to ruthenium tetroxide (RuO₄), the resin having a hydrophilic group is detected by Ru imaging.

Examples of the porous sheet composed of a fibrous material include a non-woven fabric and paper. Examples of a material constituting the fibrous material include: polyesters such as polyethylene terephthalate, polyolefins such as a polyethylene and a polypropylene, heat-resistant resins such as a wholly aromatic polyamide, a polyimide, a polyamideimide, a polyethersulfone, a polysulfone, a polyetherketone, and a polyetherimide, and celluloses.

Examples of the composite porous sheet include a sheet in which a functional layer is laminated on a microporous film or a porous sheet composed of a fibrous material. The composite porous sheet is preferred from the viewpoint that a function can be further added with the functional layer. Examples of the functional layer include a porous heat-resistant layer from the viewpoint of imparting the heat resistance to the composite porous sheet. Examples of a method of compositing the microporous film or the porous sheet and the functional layer include a method of coating a surface of a microporous film or a porous sheet with a functional layer, a method of bonding a microporous film or a porous sheet and a functional layer with an adhesive, and a method of thermally press-bonding a microporous film or a porous sheet with a functional layer.

The surface of the porous substrate may be subjected to various surface treatments within the range of not impairing the nature of the porous substrate, for the purpose of improving wettability with a coating liquid for forming the heat-resistant porous layer or the adhesive layer. Examples of the surface treatment include a corona treatment, a plasma treatment, a flame treatment, and a UV irradiation treatment.

### -Properties of Porous Substrate-

A thickness of the porous substrate is preferably 2 µm or more, more preferably 3 µm or more, and still more preferably 4 µm or more, from the viewpoint of mechanical strength.

The thickness of the porous substrate is preferably 10 µm or less, more preferably 9 µm or less, and still more preferably 8 µm or less, from the viewpoint of increasing the energy density of the battery.

The thickness of the porous substrate is determined by measuring thicknesses at 20 points in a 10-cm square using a contact-type measuring machine and taking an average thereof.

A Gurley value of the porous substrate is preferably 30 s/100 mL or more, more preferably 50 s/100 mL or more, and still more preferably 70 s/100 mL or more, from the viewpoint of suppressing an internal short circuit of the battery.

The Gurley value of the porous substrate is preferably 200 s/100 mL or less, more preferably 180 s/100 mL or less, and still more preferably 160 s/100 mL or less, from the viewpoint of the ion permeability.

The Gurley value of the porous substrate is a value measured using a Gurley densometer according to JIS P8117:2009 "Paper and board-Determination of air permeance and air resistance (medium range)-Gurley method".

A porosity of the porous substrate is preferably 30% to 60% from the viewpoint of the ion permeability. The porosity ε (%) of the porous substrate is determined according to the following equation. $ε = \left\{1-W/\left(d⋅t\right)\right\} \times 100$

Here, W is the mass (g/m²) per unit area of the porous substrate, d is a true density (g/cm³) of the porous substrate, and t is the thickness (µm) of the porous substrate.

An average pore diameter of the porous substrate is preferably 50 nm or more, more preferably 60 nm or more, and still more preferably 70 nm or more, from the viewpoint of excellent permeability of the electrolyte solution and ion permeability.

The average pore diameter of the porous substrate is preferably 140 nm or less, more preferably 130 nm or less, and still more preferably 120 nm or less, from the viewpoint of suppressing an internal short circuit of the battery.

The average pore diameter of the porous substrate is a value measured using a palm porometer according to ASTM E1294-89.

When the porous substrate is a polyolefin microporous film, the average pore diameter of the porous substrate can be controlled by adjusting a stretching ratio in forming the polyolefin microporous film.

In the present disclosure, the Gurley value of the polyolefin microporous film is a value measured only with the polyolefin microporous film without the resin (AI) in the pores.

In the present disclosure, the porosity of the polyolefin microporous film is a value calculated only with the polyolefin microporous film without the resin (AI) in the pores.

In the present disclosure, the average pore diameter of the polyolefin microporous film is a value measured only with the polyolefin microporous film without the resin (AI) in the pores.

### [Heat-resistant Porous Layer]

A porous layer means a layer having a large number of micropores and allowing a gas or a liquid to pass from one surface to the other surface. The heat-resistant porous layer is a porous layer having heat resistance by containing a heat-resistant material (for example, a heat-resistant resin and/or inorganic particles).

In the present disclosure, the heat-resistant resin refers to a resin having a melting point of 200°C or higher or a resin having no melting point and having a decomposition temperature of 200°C or higher. That is, the heat-resistant resin in the present disclosure is a resin that is not melted or decomposed in a temperature range of lower than 200°C.

In the present disclosure, the heat-resistant porous layer is a porous layer containing inorganic particles and a binder resin. The heat-resistant porous layer may be a porous layer composed of only inorganic particles and a binder resin, or may be a porous layer composed of inorganic particles, a binder resin, and other materials.

Form examples of the heat-resistant porous layer include: a structure in which inorganic particles are bound or captured in a porous structure in which fibrils containing a binder resin are connected in a two-dimensional or three-dimensional network shape; a structure in which inorganic particles are bound or captured in a network microporous structure containing a binder resin; and a layered structure in which a binder resin connects a large number of inorganic particles to each other to form voids between the inorganic particles.

### -Inorganic Particles-

Examples of the inorganic particles include metal oxide particles, metal hydroxide particles, metal sulfate particles, metal carbonate particles, metal nitride particles, and clay mineral particles.

Examples of a metal oxide constituting the metal oxide particles include silica (silicon dioxide), alumina (aluminum oxide), boehmite (alumina monohydrate), titania (titanium oxide), zirconia (zirconium oxide), magnesium oxide, and barium oxide, and alumina is preferred.

Examples of a metal hydroxide constituting the metal hydroxide particles include magnesium hydroxide, aluminum hydroxide, calcium hydroxide, chromium hydroxide, zirconium hydroxide, cerium hydroxide, nickel hydroxide, and boron hydroxide, and magnesium hydroxide is preferred.

Examples of a metal sulfate constituting the metal sulfate particles include barium sulfate and calcium sulfate, and barium sulfate is preferred.

Examples of a metal carbonate constituting the metal carbonate particles include calcium carbonate, magnesium carbonate, and barium carbonate.

Examples of a metal nitride constituting the metal nitride particles include boron nitride and aluminum nitride.

Examples of the clay mineral particles include calcium silicate and talc.

The inorganic particles may be inorganic particles surface-modified with a silane coupling agent or the like.

One kind of the inorganic particles may be used alone, or a combination of two or more kinds thereof may be used.

The inorganic particles are preferably at least one selected from the group consisting of metal oxide particles, metal hydroxide particles, and metal sulfate particles from the viewpoint of stability to the electrolyte solution and electrochemical stability. Among these, at least one selected from the group consisting of alumina particles (aluminum oxide particles), magnesium hydroxide particles, and barium sulfate particles is more preferred.

As the inorganic particles, metal sulfate particles are preferred, and barium sulfate particles are more preferred, from the viewpoint that the particles are less likely to decompose the electrolyte solution or an electrolyte and is thus less likely to cause gas generation in the battery.

A particle shape of the inorganic particles is not limited and may be any of a spherical shape, an elliptical shape, a plate shape, a needle shape, and an indefinite shape. The inorganic particles contained in the heat-resistant porous layer are preferably plate-shaped particles or non-aggregated primary particles from the viewpoint of suppressing an internal short circuit of the battery.

An average primary particle diameter of the inorganic particles contained in the heat-resistant porous layer is preferably 0.01 µm to 2 µm, more preferably 0.02 µm to 1 µm, and still more preferably 0.03 µm to 0.5 µm, from the viewpoint of forming a favorable porous structure and from the viewpoint of suppressing delamination with the porous substrate.

The average primary particle diameter of the inorganic particles is determined by measuring major diameters of 100 inorganic particles randomly selected in observation using a scanning electron microscope (SEM) and averaging the major diameters of the 100 particles. A sample subjected to the SEM observation is inorganic particles as a material forming the heat-resistant porous layer or inorganic particles extracted from the heat-resistant porous layer. A method for extracting the inorganic particles from the heat-resistant porous layer is not limited. Examples of the method include: a method of immersing the heat-resistant porous layer peeled off from the separator in an organic solvent that dissolves a binder resin, dissolving the binder resin in the organic solvent, and extracting the inorganic particles; and a method of heating the heat-resistant porous layer peeled off from the separator to about 800°C to eliminate the binder resin and extracting the inorganic particles.

A volume proportion of the inorganic particles in a solid content volume of the heat-resistant porous layer is preferably 50 vol% to 90 vol%, more preferably 55 vol% to 85 vol%, and still more preferably 65 vol% to 80 vol%, from the viewpoint of forming a favorable porous structure and from the viewpoint of suppressing delamination with the porous substrate.

When the heat-resistant porous layer is disposed on both surfaces of the porous substrate, the kind and/or the content of the inorganic particles contained in one heat-resistant porous layer may be the same as or different from the kind and/or the content of the inorganic particles contained in the other heat-resistant porous layer.

### -Organic Particles-

The heat-resistant porous layer may contain organic particles. Examples of the organic particles include: particles composed of a crosslinked polymer such as a crosslinked poly(meth)acrylic acid, a crosslinked poly(meth)acrylic acid ester, a crosslinked polysilicone, a crosslinked polystyrene, a crosslinked polydivinylbenzene, a styrene-divinylbenzene copolymer crosslinked product, a melamine resin, a phenol resin, and a benzoguanamine-formaldehyde condensate; and particles composed of a heat-resistant polymer such as a polysulfone, a polyacrylonitrile, an aramid, and a polyacetal.

The resin constituting the organic particles may be a mixture, a modified product, a derivative, a copolymer (a random copolymer, an alternating copolymer, a block copolymer, or a graft copolymer), or a crosslinked product of the above exemplary materials.

One kind of the organic particles may be used alone, or a combination of two or more kinds thereof may be used.

### -Binder Resin-

The binder resin contained in the heat-resistant porous layer has an effect of binding the inorganic particles contained in the heat-resistant porous layer to each other, an effect of adhering the heat-resistant porous layer to the porous substrate, an effect of adhering the heat-resistant porous layer to the electrode, and an effect of improving the heat resistance of the heat-resistant porous layer. The binder resin contained in the heat-resistant porous layer may have a particle shape in the heat-resistant porous layer, may not have a specific shape, and may have any form as long as it can bind the inorganic particles to each other.

The binder resin may be a heat-resistant resin or a non-heat-resistant resin. The binder resin preferably contains a heat-resistant resin from the viewpoint of further improving the heat resistance of the heat-resistant porous layer and improving the safety of the separator.

Examples of the binder resin include a polyamide, a polyimide, a polyamideimide, a polyacrylamide, a polyacrylimide, a polyether polyamide, a polyether polyimide, a poly-N-vinylacetamide, a fluorine-based resin, an acrylic resin, a styrene-butadiene copolymer, a butadiene-acrylonitrile-based resin, a cellulose, a polyvinyl pyrrolidone, a polyether, a polysulfone, a polyethersulfone, a polyketone, and a polyetherketone. One kind of the resin may be used alone, or a combination of two or more kinds thereof may be used.

The binder resin is preferably a polyamide, a polyimide, or a polyamideimide from the viewpoints of the heat resistance, the stability to the electrolyte solution, and the electrochemical stability.

The polyamide is preferably a wholly aromatic polyamide from the viewpoint of durability. The wholly aromatic polyamide means a polyamide having a principal chain composed only of a benzene ring and an amide bond. However, the wholly aromatic polyamide may be copolymerized with a small amount of an aliphatic monomer. The wholly aromatic polyamide is also called an aramid.

The wholly aromatic polyamide may be of meta type or para type. Among the wholly aromatic polyamide, a meta type wholly aromatic polyamide is preferred from the viewpoint of easy formation of a porous layer and from the viewpoint of excellent oxidation-reduction resistance in an electrode reaction. Specifically, the wholly aromatic polyamide is preferably polymetaphenylene isophthalamide or polyparaphenylene terephthalamide, and more preferably polymetaphenylene isophthalamide.

The meta type wholly aromatic polyamide is a polymer having flexibility higher than that of a para type wholly aromatic polyamide, and therefore, in forming the heat-resistant porous layer, the meta type wholly aromatic polyamide enters the pores of the porous substrate (for example, the polyolefin microporous film) and easily adheres to the wall surfaces of the pores or easily forms a fibrous structure. When the meta type aromatic polyamide adheres to the wall surfaces of the pores of the porous substrate or the fibrous meta type aromatic polyamide is contained in the pores, the electrolyte solution is like to permeate the porous substrate.

From the viewpoint of the heat resistance, the stability to the electrolyte solution, and the electrochemical stability, the binder resin is preferably a fluorine-based resin, and more preferably a polyvinylidene fluoride-based resin.

Examples of the polyvinylidene fluoride-based resin include: a homopolymer of vinylidene fluoride (that is, polyvinylidene fluoride); a copolymer of vinylidene fluoride and another monomer (a polyvinylidene fluoride copolymer); and a mixture of polyvinylidene fluoride and a polyvinylidene fluoride copolymer. Examples of the monomer copolymerizable with vinylidene fluoride include tetrafluoroethylene, hexafluoropropylene, trifluoroethylene, chlorotrifluoroethylene, trichloroethylene, vinyl fluoride, trifluoroperfluoropropyl ether, ethylene, (meth)acrylic acid, methyl (meth)acrylate, a (meth)acrylate ester, vinyl acetate, vinyl chloride, and acrylonitrile. One kind of the monomer may be used alone, or a combination of two or more kinds thereof may be used.

The binder resin is preferably an acrylic resin from the viewpoints of the stability to the electrolyte solution and the electrochemical stability. Examples of the acrylic resin include: a homopolymer or a copolymer of an acrylic monomer; and a copolymer of an acrylic monomer and a styrene-based monomer. One kind of the resin may be used alone, or a combination of two or more kinds thereof may be used.

Examples of the acrylic monomer of the acrylic resin include (meth)acrylic acid, methyl (meth)acrylate, ethyl (meth)acrylate, isopropyl (meth)acrylate, n-butyl (meth)acrylate, isobutyl (meth)acrylate, t-butyl (meth)acrylate, n-hexyl (meth)acrylate, 2-ethylhexyl (meth)acrylate, lauryl (meth)acrylate, stearyl (meth)acrylate, cyclohexyl (meth)acrylate, dicyclopentanyl (meth)acrylate, isobornyl (meth)acrylate, 2-hydroxyethyl (meth)acrylate, hydroxypropyl (meth)acrylate, and 4-hydroxybutyl (meth)acrylate. The acrylic monomer is preferably a (meth)acrylic acid alkyl ester. An alkyl group in an ester moiety of the (meth)acrylic acid alkyl ester is preferably an alkyl group having 1 to 10 carbon atoms, and more preferably an alkyl group having 1 to 8 carbon atoms. One kind of the acrylic monomer may be used alone, or a combination of two or more kinds thereof may be used.

Examples of the styrene-based monomer of the acrylic resin include: styrene, α-methylstyrene; an alkylsubstituted styrene such as 2-methylstyrene, 3-methylstyrene, 4-methylstyrene, 2-ethylstyrene, 3-ethylstyrene, and 4-ethylstyrene; a halogen-substituted styrene such as 2-chlorostyrene, 3-chlorostyrene, and 4-chlorostyrene; and a fluorine-substituted styrene such as 4-fluorostyrene and 2,5-difluorostyrene. The styrene-based monomer is preferably styrene or α-methylstyrene, and more preferably styrene. One kind of the styrene-based monomer may be used alone, or a combination of two or more kinds thereof may be used.

A volume proportion of the binder resin in the solid content volume of the heat-resistant porous layer is preferably 10 vol% to 50 vol%, more preferably 15 vol% to 45 vol%, and still more preferably 20 vol% to 35 vol%, from the viewpoint of forming a favorable porous structure and from the viewpoint of suppressing delamination with the porous substrate.

When the heat-resistant porous layer is disposed on both surfaces of the porous substrate, the kind and/or the content of the binder resin contained in one heat-resistant porous layer may be the same as or different from the kind and/or the content of the binder resin contained in the other heat-resistant porous layer.

### -Other Components-

The heat-resistant porous layer may contain an additive, for example, a dispersant such as a surfactant, a wetting agent, an antifoaming agent, or a pH adjuster. The dispersant is added to, for example, a coating liquid for forming the heat-resistant porous layer for the purpose of improving dispersibility, coatability, or storage stability. The wetting agent, the antifoaming agent, or the pH adjuster is added to, for example, the coating liquid for forming the heat-resistant porous layer for the purpose of improving compatibility with the porous substrate, for the purpose of suppressing mixing of air into the coating liquid, or for the purpose of adjusting the pH.

### -Properties of Heat-resistant Porous Layer-

When the heat-resistant porous layer is provided only on one surface of the porous substrate, a thickness of the heat-resistant porous layer is preferably 0.5 µm to 4 µm, more preferably 1 µm to 3.5 µm, and still more preferably 1.5 µm to 3 µm, from the viewpoint of the heat resistance and the permeability of the electrolyte solution.

When the heat-resistant porous layer is provided on both surfaces of the porous substrate, the thickness of the heat-resistant porous layers is preferably 1 µm to 8 µm, more preferably 2 µm to 7 µm, and still more preferably 3 µm to 6 µm, in total of both surfaces, from the viewpoint of the heat resistance and the permeability of the electrolyte solution.

The thickness of the heat-resistant porous layer is a value obtained by subtracting the thickness of the porous substrate from a thickness of a flat film obtained by removing the adhesive layer from the separator. The thickness of the flat film obtained by removing the adhesive layer from the separator is determined by measuring thicknesses at 20 points in a 10-cm square using a contact-type measuring machine and taking an average thereof.

When the heat-resistant porous layer is provided only one surface of the porous substrate, a mass per unit area (that is, a basis weight) of the heat-resistant porous layer is preferably 1 g/m² to 4.5 g/m², more preferably 1.5 g/m² to 4 g/m², and still more preferably 2 g/m² to 3.5 g/m².

When the heat-resistant porous layer is provided on both surfaces of the porous substrate, the mass per unit area (that is, the basis weight) of the heat-resistant porous layers is preferably 2 g/m² to 9 g/m², more preferably 3 g/m² to 8 g/m², and still more preferably 4 g/m² to 7 g/m², in total of both surfaces.

The mass per unit area of the heat-resistant porous layer (that is, the basis weight) is a value obtained by subtracting a basis weight of the porous substrate from a basis weight of a flat film obtained by removing the adhesive layer from the separator. The basis weight of the flat film obtained by removing the adhesive layer from the separator is obtained by cutting the separator into 20 cm × 20 cm, removing the adhesive layer, measuring a mass, and dividing the mass by an area.

A porosity of the heat-resistant porous layer is preferably 20% to 70% from the viewpoint of the ion permeability.

The porosity ε (%) of the heat-resistant porous layer is determined according to the following equation. [Math. 1] $ε = \left(1-\frac{{\sum }_{i = 1}^{n} \frac{{W}_{i}}{{d}_{i}}}{t}\right) \times 100$

Here, regarding a constituent material 1, a constituent material 2, a constituent material 3, ..., and a constituent material n of the heat-resistant porous layer, the mass per unit area of each constituent material is W₁, W₂, W₃, ..., and Wₙ (g/cm²), the true density of each constituent material is d₁, d₂, d₃, ..., and dₙ (g/cm³), and the thickness of the heat-resistant porous layer is t (cm).

### [Adhesive Layer]

The adhesive layer is a layer disposed on the surface of the porous substrate or the heat-resistant porous layer and is present as the outermost layer of the separator. The adhesive layer has a large number of gaps or micropores and is a layer through which a gas or a liquid can pass from one surface to the other surface.

The adhesive layer may be a layer composed of only adhesive resin particles or a layer composed of adhesive resin particles and a material other than the adhesive resin particles. Examples of a material other than the adhesive resin particles include non-particulate resins, a dispersant, a wetting agent, an antifoaming agent, or a pH adjuster.

A mass proportion of the adhesive resin particles in the adhesive layer is preferably 90 mass% or more, more preferably 95 mass% or more, and still more preferably 99 mass% or more, from the viewpoint of the adhesiveness to the electrode. The mass proportion of the adhesive resin particles in the adhesive layer may be 100 mass%.

### -Adhesive Resin Particles-

Examples of the adhesive resin particles include acrylic resin particles, polyvinylidene fluoride-based resin particles, styrene-butadiene rubber particles, fluorine-based rubber particles, butadiene-acrylonitrile-based resin particles, and cellulose particles. Among these, from the viewpoint of excellent adhesiveness to the electrode, at least one selected from the group consisting of acrylic resin particles, polyvinylidene fluoride-based resin particles, and styrene-butadiene rubber particles is preferred.

Examples of an acrylic resin constituting the acrylic resin particles: a homopolymer or a copolymer of an acrylic monomer; and a copolymer of an acrylic monomer and a styrene-based monomer. One kind of the resin may be used alone, or a combination of two or more kinds thereof may be used.

Examples of the acrylic monomer of the acrylic resin include (meth)acrylic acid, methyl (meth)acrylate, ethyl (meth)acrylate, isopropyl (meth)acrylate, n-butyl (meth)acrylate, isobutyl (meth)acrylate, t-butyl (meth)acrylate, n-hexyl (meth)acrylate, 2-ethylhexyl (meth)acrylate, lauryl (meth)acrylate, stearyl (meth)acrylate, cyclohexyl (meth)acrylate, dicyclopentanyl (meth)acrylate, isobornyl (meth)acrylate, 2-hydroxyethyl (meth)acrylate, hydroxypropyl (meth)acrylate, and 4-hydroxybutyl (meth)acrylate. The acrylic monomer is preferably a (meth)acrylic acid alkyl ester. The alkyl group in the ester moiety of the (meth)acrylic acid alkyl ester is preferably an alkyl group having 1 to 10 carbon atoms, and more preferably an alkyl group having 1 to 8 carbon atoms. One kind of the acrylic monomer may be used alone, or a combination of two or more kinds thereof may be used.

Examples of the styrene-based monomer of the acrylic resin include: styrene, α-methylstyrene; an alkylsubstituted styrene such as 2-methylstyrene, 3-methylstyrene, 4-methylstyrene, 2-ethylstyrene, 3-ethylstyrene, and 4-ethylstyrene; a halogen-substituted styrene such as 2-chlorostyrene, 3-chlorostyrene, and 4-chlorostyrene; and a fluorine-substituted styrene such as 4-fluorostyrene and 2,5-difluorostyrene. The styrene-based monomer is preferably styrene or α-methylstyrene, and more preferably styrene. One kind of the styrene-based monomer may be used alone, or a combination of two or more kinds thereof may be used.

Examples of the polyvinylidene fluoride-based resin constituting the polyvinylidene fluoride-based resin particles include: a homopolymer of vinylidene fluoride (that is, polyvinylidene fluoride); a copolymer of vinylidene fluoride and another monomer (a polyvinylidene fluoride copolymer); and a mixture of polyvinylidene fluoride and a polyvinylidene fluoride copolymer. Examples of the monomer copolymerizable with vinylidene fluoride include tetrafluoroethylene, hexafluoropropylene, trifluoroethylene, chlorotrifluoroethylene, trichloroethylene, vinyl fluoride, trifluoroperfluoropropyl ether, ethylene, (meth)acrylic acid, methyl (meth)acrylate, a (meth)acrylate ester, vinyl acetate, vinyl chloride, and acrylonitrile. One kind of the monomer may be used alone, or a combination of two or more kinds thereof may be used.

The polyvinylidene fluoride copolymer is preferably a copolymer containing 50 mol% or more of a vinylidene fluoride unit from the viewpoint of imparting the mechanical strength to the adhesive resin particles to withstand pressurization and heating during the production of the battery.

As the polyvinylidene fluoride copolymer, a copolymer of vinylidene fluoride and hexafluoropropylene is preferred. The copolymer is preferably a copolymer containing 0.1 mol% to 10 mol% (preferably 0.5 mol% to 5 mol%) of a hexafluoropropylene unit.

A styrene-butadiene rubber constituting the styrene-butadiene rubber particles may be an emulsion polymer, a solution polymer, a random copolymer, or a block copolymer. A styrene content in the styrene-butadiene rubber is preferably 20 mass% to 50 mass%.

A coverage on the surface of the separator with the adhesive resin particles is preferably 10% or more, more preferably 20% or more, and still more preferably 30% or more on each of surfaces on which the adhesive layer is disposed, from the viewpoint of excellent adhesiveness to the electrode.

The coverage on the surface of the separator with the adhesive resin particles is preferably 80% or less, more preferably 70% or less, and still more preferably 60% or less on each of surfaces on which the adhesive layer is disposed, from the viewpoint of excellent permeability of the electrolyte solution and ion permeability.

The coverage on the surface of the separator with the adhesive resin particles is an area proportion at which the surface of the separator in a plan view is covered with the adhesive resin particles. The coverage is determined by imaging the surface of the separator from a surface perpendicular direction using a scanning electron microscope (SEM), randomly selecting 10 square regions, obtaining the coverage of each region, and calculating an average value of the coverage of the 10 regions.

The coverage on the surface of the separator with the adhesive resin particles can be controlled based on a resin particle concentration and a coating amount of an adhesive resin particle dispersion liquid for forming the adhesive layer.

When the adhesive layer is provided on both surfaces of the separator, the kind and/or the coverage of the adhesive resin particles contained in one adhesive layer may be the same as or different from the kind and/or the coverage of the adhesive resin particles contained in the other adhesive layer.

### -Other Components-

The adhesive layer may contain a binder resin that binds the adhesive resin particles to the laminate. The binder resin is preferably the same resin as the resin contained in the heat-resistant porous layer.

The adhesive layer may contain an additive, for example, a dispersant such as a surfactant, a wetting agent, an antifoaming agent, or a pH adjuster. The dispersant is added to, for example, a resin particle dispersion liquid for forming the adhesive layer for the purpose of improving the dispersibility, the coatability, or the storage stability. The wetting agent, the antifoaming agent, or the pH adjuster is added to, for example, a resin particle dispersion liquid for forming the adhesive layer for the purpose of improving the compatibility with the heat-resistant porous layer or the porous substrate, for the purpose of suppressing mixing of air into the resin particle dispersion liquid, or for the purpose of adjusting the pH.

### [Properties of Separator]

A thickness of the separator is preferably 6 µm or more, more preferably 8 µm or more, and still more preferably 10 µm or more, from the viewpoint of the mechanical strength.

The thickness of the separator is preferably 18 µm or less, more preferably 16 µm or less, and still more preferably 14 µm or less, from the viewpoint of the energy density of the battery.

The thickness of the separator is determined by measuring thicknesses at 20 points in a 10-cm square using a contact-type measuring machine and taking an average thereof.

A Gurley value of the separator is preferably 150 s/100 mL or more, more preferably 180 s/100 mL or more, and still more preferably 200 s/100 mL or more, from the viewpoint of suppressing an internal short circuit of the battery.

The Gurley value of the separator is preferably 300 s/100 mL or less, more preferably 280 s/100 mL or less, and still more preferably 260 s/100 mL or less, from the viewpoint of the ion permeability.

The Gurley value of the separator is a value measured using a Gurley densometer according to JIS P8117:2009 "Paper and board-Determination of air permeance and air resistance (medium range)-Gurley method".

### [Method for Producing Separator]

The separator according to the present disclosure can be produced, for example, by a production method (A) or a production method (B) below. In the production method (A) and the production method (B), a heat-resistant porous layer is formed on a porous substrate by using a wet coating method, and an adhesive layer is formed on the laminate by using a dry coating method. In the present disclosure, the wet coating method is a method of solidifying a coating layer in a coagulation liquid. In the present disclosure, the dry coating method is a method of drying a coating layer to solidify the coating layer.

Production method (A) (continuous production method): a heat-resistant porous layer is formed on a porous substrate unwound from a roll by using a wet coating method to obtain a laminate including the porous substrate and the heat-resistant porous layer, an adhesive layer is formed on the laminate by using a dry coating method to obtain a separator, and the finished separator is wound around another roll.

Production method (B) (non-continuous production method): a heat-resistant porous layer is formed on a porous substrate unwound from a roll by using a wet coating method to obtain a laminate including the porous substrate and the heat-resistant porous layer, and then the laminate is once wound around another roll. Next, an adhesive layer is formed by using a dry coating method on the laminate unwound from the roll to obtain a separator, and the finished separator is wound around another roll.

Hereinafter, steps included in the production method (A) will be described in detail. The production method (A) includes the following steps (1) to (7).

### -Step (1): Preparation of Heat-resistant Porous Layer Forming Coating Liquid-

A heat-resistant porous layer forming coating liquid is prepared by dispersing and dissolving inorganic particles and a binder resin in a solvent. In the coating liquid, a component other than the inorganic particles and the binder resin is dissolved or dispersed as necessary.

A solvent used for preparing the coating liquid includes a solvent that dissolves the binder resin (hereinafter, also referred to as a "good solvent"). Examples of the good solvent include a polar amide solvent. Examples of the polar amide solvent include dimethylacetamide, dimethylformamide, and N-methylpyrrolidone.

The solvent used for preparing the coating liquid preferably contains a phase separation agent that induces phase separation from the viewpoint of forming a favorable porous structure. Therefore, the solvent used for preparing the coating liquid is preferably a mixed solvent of a good solvent and a phase separation agent. The phase separation agent is preferably mixed with the good solvent in an amount within a range that the viscosity suitable for coating can be ensured. Examples of the phase separation agent include water, methanol, ethanol, propyl alcohol, butyl alcohol, butanediol, ethylene glycol, propylene glycol, and tripropylene glycol.

The solvent used for preparing the coating liquid is preferably a mixed solvent of a good solvent and a phase separation agent containing 60 mass% or more of the good solvent and 5 mass% to 40 mass% of the phase separation agent from the viewpoint of forming a favorable porous structure.

A resin concentration in the coating liquid is preferably 1 mass% to 20 mass% from the viewpoint of forming a favorable porous structure. An inorganic particle concentration in the coating liquid is preferably 0.5 mass% to 50 mass% from the viewpoint of forming a favorable porous structure.

### -Step (2): Preparation of Adhesive Resin Particle Dispersion Liquid-

An adhesive layer forming coating liquid is preferably an adhesive resin particle dispersion liquid. The adhesive resin particle dispersion liquid is prepared by dispersing adhesive resin particles in an appropriate dispersion medium (for example, water). A surfactant may be added to the adhesive resin particle dispersion liquid in order to improve the dispersibility of the adhesive resin particles in the dispersion medium. The adhesive resin particle dispersion liquid may be a commercially available product or a dilution liquid of the commercially available product.

A concentration of the adhesive resin particles in the adhesive resin particle dispersion liquid is preferably 1 mass% to 60 mass% from the viewpoint of coating suitability.

### -Step (3): Coating Using Heat-resistant Porous Layer Forming Coating Liquid-

At least one surface of the porous substrate is coated with the heat-resistant porous layer forming coating liquid to form a coating layer on the porous substrate. Examples of a coating method using the coating liquid include a knife coating method, a Meyer bar coating method, a die coating method, a reverse roll coating method, a roll coating method, and a gravure coating method. When the heat-resistant porous layer is to be formed on both surfaces of the porous substrate, it is preferable to simultaneously coat both surfaces of the porous substrate with the coating liquid from the viewpoint of productivity.

### -Step (4): Solidification of Coating Layer-

The porous substrate on which the coating layer to be the heat-resistant porous layer is formed is immersed in a coagulation liquid, and the binder resin is solidified while inducing phase separation in the coating layer. Accordingly, a laminate including the porous substrate and the heat-resistant porous layer is obtained.

The coagulation liquid generally contains the good solvent and the phase separation agent used for preparing the coating liquid, and water. A mixing ratio between the good solvent and the phase separation agent is preferably matched with a mixing ratio in the mixed solvent used for preparing the coating liquid in terms of production. A water content in the coagulation liquid is preferably 40 mass% to 90 mass% from the viewpoint of formation of the porous structure and the productivity. A temperature of the coagulation liquid is, for example, 20°C to 50°C.

### -Step (5): Water Washing and Drying of Coating Layer-

The laminate is withdrawn from the coagulation liquid and washed with water. By washing with water, the coagulation liquid is removed from the laminate. Further, water is removed from the laminate by drying. The washing with water is performed by, for example, conveying the laminate into a water bath. The drying is performed, for example, by conveying the laminate into a high-temperature environment, applying wind to the laminate, or bringing the laminate into contact with a heat roll. A drying temperature is preferably 40°C to 80°C.

### -Step (6): Coating Using Adhesive Resin Particle Dispersion Liquid-

At least one surface of the laminate is coated with the adhesive resin particle dispersion liquid. Examples of a coating method using the adhesive resin particle dispersion liquid include a knife coating method, a gravure coating method, a Meyer bar coating method, a die coating method, a reverse roll coating method, a roll coating method, a screen printing method, an inkjet method, and a spray method. When the adhesive layer is to be formed on both surfaces of the laminate, it is preferable to simultaneously coat both surfaces of the laminate with the adhesive resin particle dispersion liquid from the viewpoint of the productivity.

### -Step (7): Drying of Adhesive Resin Particle Dispersion Liquid-

The adhesive resin particle dispersion liquid on the laminate is dried to adhere the adhesive resin particles to the surface of the laminate. The drying is performed, for example, by transporting the laminate into a high temperature environment, or applying air to the laminate. A drying temperature is preferably 40°C to 100°C.

The production method (B) can be performed by performing the steps (1) to (5), winding the laminate once around a roll, unwinding the laminate from the roll, and performing the steps (6) and (7).

### <Non-aqueous Secondary Battery>

A non-aqueous secondary battery according to the present disclosure is a non-aqueous secondary battery that obtains an electromotive force by doping and de-doping a lithium ion, and includes a positive electrode, a negative electrode, and the separator according to the present disclosure. The doping means occlusion, support, adsorption, or insertion and means a phenomenon that the lithium ion enters an active material of an electrode.

The non-aqueous secondary battery according to the present disclosure has a structure in which, for example, a battery element in which a negative electrode and a positive electrode face each other with a separator interposed therebetween is enclosed in an exterior material together with an electrolyte solution. The non-aqueous secondary battery according to the present disclosure is suitable for a non-aqueous electrolyte secondary battery, particularly for a lithium ion secondary battery.

In the non-aqueous secondary battery according to the present disclosure, since the separator according to the present disclosure has excellent adhesiveness to the electrode, the electrode is less likely to be peeled off from the separator, and an internal short circuit is less likely to occur.

In the non-aqueous secondary battery according to the present disclosure, since the separator according to the present disclosure has excellent permeability of the electrolyte solution, the battery can be quickly produced.

Since the separator according to the present disclosure has excellent ion permeability, the non-aqueous secondary battery according to the present disclosure has excellent battery properties.

Hereinafter, form examples of the positive electrode, the negative electrode, the electrolyte solution, and the exterior material included in the non-aqueous secondary battery according to the present disclosure will be described.

Examples of an embodiment of the positive electrode include a structure in which an active material layer containing a positive electrode active material and a binder resin is disposed on a current collector. The active material layer may further contain a conductive auxiliary agent. Examples of the positive electrode active material include a lithium-containing transition metal oxide, and specific examples thereof include LiCoO₂, LiNiO₂, LiMn_{1/2}Ni_{1/2}O₂, LiCo_{1/3}Mn_{1/3}Ni_{1/3}O₂, LiMn₂O₄, LiFePO₄, LiCo_{1/2}Ni_{1/2}O₂, and LiAl_{1/4}Ni_{3/4}O₂. Examples of the binder resin include a polyvinylidene fluoride-based resin and a styrene-butadiene copolymer. Examples of the conductive auxiliary agent include carbon materials such as acetylene black, Ketjen black, and a graphite powder. Examples of the current collector include an aluminum foil, a titanium foil, and a stainless steel foil, each having a thickness of 5 µm to 20 µm.

Examples of an embodiment example of the negative electrode include a structure in which an active material layer containing a negative electrode active material and a binder resin is disposed on a current collector. The active material layer may further contain a conductive auxiliary agent. Examples of the negative electrode active material include materials capable of electrochemically occluding a lithium ion, and specific examples thereof include carbon materials, alloys of lithium with silicon, tin, aluminum, or the like, and a wood's alloy. Examples of the binder resin include a polyvinylidene fluoride-based resin and a styrene-butadiene copolymer. Examples of the conductive auxiliary agent include carbon materials such as acetylene black, Ketjen black, a graphite powder, and an ultrafine carbon fiber. Examples of the current collector include a copper foil, a nickel foil, and a stainless steel foil, each having a thickness of 5 µm to 20 µm. Instead of the negative electrode above, a metal lithium foil may be used as the negative electrode.

The electrolyte solution is preferably a solution obtained by dissolving a lithium salt in a non-aqueous solvent. Examples of the lithium salt include LiPF₆, LiBF₄, and LiClO₄. Examples of the non-aqueous solvent include: cyclic carbonates such as ethylene carbonate, propylene carbonate, fluoroethylene carbonate, difluoroethylene carbonate, and vinylene carbonate; chain carbonates such as dimethyl carbonate, diethyl carbonate, ethyl methyl carbonate, and a fluorine-substituted compound thereof; and cyclic esters such as γ-butyrolactone and γ-valerolactone, and these non-aqueous solvents may be used alone or as a mixture.

The electrolyte solution is suitably a solution which is obtained by mixing a cyclic carbonate and a chain carbonate at a mass ratio (cyclic carbonate: chain carbonate) of 20:80 to 40:60 and dissolving a lithium salt therein in a range of 0.5 mol/L to 1.5 mol/L.

Examples of the exterior material include an aluminum laminated film pack and a metal can. A shape of the battery is a square shape, a cylindrical shape, a coin shape, or the like, and the separator according to the present disclosure is suitable for any shape.

The non-aqueous secondary battery according to the present disclosure can be produced, for example, by any one of a production method (1) to a production method (3) below using a laminated product in which the separator according to the present disclosure is disposed between a positive electrode and a negative electrode after producing the laminated product.

Production method (1): electrodes and the separator are temporarily bonded by dry heat pressing a laminated product and then housed in an exterior material (for example, an aluminum laminated film pack; the same applies hereinafter), and an electrolyte solution is injected thereto. Next, the laminated product is wet heat pressed from over the exterior material to bond the electrodes and the separator and seal the exterior material.

Production method (2): a laminated product is housed in an exterior material, and an electrolyte solution is injected thereto. Next, the laminated product is wet heat pressed from over the exterior material to bond the electrodes and the separator and seal the exterior material.

Production method (3): electrodes and the separator are bonded to each other by dry heat pressing a laminated product, then the electrodes and the separator are housed in an exterior material, and an electrolyte solution is injected thereto. Next, the exterior material is sealed.

In the production methods (1) to (3), a press temperature in the wet heat press and the dry heat press is preferably 50°C to 100°C, and more preferably 60°C to 90°C. A press pressure in the wet heat press and the dry heat press is preferably 0.1 MPa to 2 MPa, and more preferably 0.5 MPa to 1.5 MPa. A press time is preferably adjusted according to the press temperature and the press pressure, and is adjusted, for example, in a range of 1 minute to 20 hours.

In the production of the laminated product in which the separator is disposed between the positive electrode and the negative electrode, a method of disposing the separator between the positive electrode and the negative electrode may be a method of laminating one by one at least one layer of the positive electrode, the separator, and the negative electrode in this order (a so-called stack method) or may be a method of laminating the positive electrode, the separator, the negative electrode, and the separator in this order and winding them in a length direction.

### Examples

Hereinafter, the separator and the non-aqueous secondary battery according to the present disclosure will be further specifically described with reference to Examples. The materials, the used amounts, the proportions, the treatment procedures, and the like described in the following Examples can be changed, as appropriate, without departing from the gist of the present disclosure. Therefore, the ranges of the separator and the non-aqueous secondary battery according to the present disclosure should not be interpreted by the following specific examples in a limited manner.

In the following description, synthesis, treatment, production, test, and the like were performed at room temperature (25°C ± 3°C) unless otherwise specified.

### <Measurement Method and Evaluation Method>

The measurement methods and the evaluation methods applied in Examples and Comparative Examples are as follows.

### [Thicknesses of Polyethylene Microporous Film and Separator]

The thicknesses (µm) of the polyethylene microporous film and the separator were determined by measuring thicknesses at 20 points in a 10-cm square using a contact-type length measuring machine LITEMATIC VL-50S (manufactured by Mitutoyo Corporation) and taking an average thereof. A spherical probe (Mitutoyo Corporation) having a sphere radius of 10 mm was used and was adjusted such that a load of 0.19 N was applied during the measurement.

### [Gurley Values of Polyethylene Microporous Film and Separator]

The Gurley values (s/100 mL) of the polyethylene microporous film and the separator were measured using a Gurley densometer G-B2C (manufactured by Toyo Seiki Seisakusho, Ltd.) according to JIS P8117:2009.

### [Average Pore Diameter of Polyethylene Microporous Film]

The average pore diameter (nm) of the polyethylene microporous film was measured using a palm porometer CFP-1500-A (Porous Materials, Inc.) according to ASTM E1294-89.

### [Average Pore Diameter X of Heat-resistant Porous Layer]

The average pore diameter X (nm) of the heat-resistant porous layer was calculated according to the following equation, assuming that all pores were cylindrical.$X = 4 V / S$

Here, X is the average pore diameter of the heat-resistant porous layer, V is a pore volume per 1 m² of the heat-resistant porous layer, and S is the pore surface area per 1 m² of the heat-resistant porous layer.

The pore volume V per 1 m² of the heat-resistant porous layer was calculated based on the porosity of the heat-resistant porous layer. The porosity of the heat-resistant porous layer was determined as to be described later.

The pore surface area S per 1 m² of the heat-resistant porous layer was determined by using the following method.

First, the specific surface area (m²/g) of the polyethylene microporous film and the specific surface area (m²/g) of the separator were calculated based on a nitrogen gas adsorption amount by applying a BET formula to a nitrogen gas adsorption method. Each specific surface area (m²/g) was multiplied by the corresponding mass (g/m²) per unit area to calculate the corresponding pore surface area per 1 m². Then, the pore surface area per 1 m² of the polyethylene microporous film was subtracted from the pore surface area per 1 m² of the separator to calculate the pore surface area S per 1 m² of the heat-resistant porous layer.

### [Porosity of Heat-resistant Porous Layer]

The porosity ε (%) of the heat-resistant porous layer was determined according to the following equation. [Math. 2] $ε = \left(1-\frac{{\sum }_{i = 1}^{n} \frac{{W}_{i}}{{d}_{i}}}{t}\right) \times 100$

Here, regarding a constituent material 1, a constituent material 2, a constituent material 3, ..., and a constituent material n of the heat-resistant porous layer, the mass per unit area of each constituent material is W₁, W₂, W₃, ..., and Wₙ (g/cm²), the true density of each constituent material is d₁, d₂, d₃, ..., and dₙ (g/cm³), and the thickness of the heat-resistant porous layer is t (cm).

### [Average Primary Particle Diameter of Inorganic Particles]

The inorganic particles for forming the heat-resistant porous layer were used as a sample, which was observed using a SEM to determine the average primary particle diameter. Major diameters of 100 inorganic particles randomly selected in observation using a SEM were measured, and the average value of the major diameters of the 100 inorganic particles was defined as the average primary particle diameter (µm).

### [Average Primary Particle Diameter Y of Adhesive Resin Particles]

A dried product of an adhesive resin particle dispersion liquid for forming the adhesive layer was used as a sample, which was observed using a SEM to determine the average primary particle diameter Y. Major diameters of 100 adhesive resin particles randomly selected in observation using a SEM were measured, and the average value of the major diameters of the 100 adhesive resin particles was defined as the average primary particle diameter Y (nm).

### [Coverage on Surface of Separator with Adhesive Resin Particles]

The coverage (%) on the surface of the separator with the adhesive resin particles was determined by imaging the surface of the separator from a surface perpendicular direction using a SEM, randomly selecting 10 square regions, obtaining the coverage of each region, and calculating an average value of the coverage of the 10 regions.

### [Adhesiveness to Electrode]

Using a double-armed mixer, 89.5 parts by mass of a lithium cobalt oxide powder as a positive electrode active material, 4.5 parts by mass of acetylene black as a conductive auxiliary agent, 6 parts by mass of polyvinylidene fluoride as a binder resin, and an appropriate amount of N-methyl-2-pyrrolidone were stirred and mixed to prepare a positive electrode slurry. The positive electrode slurry was applied to one surface of an aluminum foil having a thickness of 20 µm, dried and then pressed to obtain a positive electrode having a positive electrode active material layer on one surface.

Hereinafter, in the description of this test, the "electrode" means a "positive electrode".

The electrode was cut into a rectangle of 15 mm in width × 70 mm in length. The separator was cut into a rectangle of 18 mm in TD × 74 mm in MD. Release paper of 15 mm in width × 70 mm in length was prepared. The separator was laminated on the active material layer of the electrode, and the release paper was further laminated on the separator to prepare a laminate.

The laminate was inserted into an aluminum laminated film pack, an electrolyte solution (1 mol/L LiPF₆-ethylene carbonate: ethyl methyl carbonate [mass ratio: 3:7]) was injected thereto, and the laminate was impregnated with the electrolyte solution. Next, the laminate together with the pack was subjected to hot press using a hot press machine in a lamination direction of the laminate (wet heat press), thereby bonding the electrode to the separator. The conditions in the hot press were a temperature of 85°C, a pressure of 1 MPa, and a time of 5 minutes. After the hot press, the laminate was taken out from the pack, and the release paper was peeled off to obtain a test piece for wet adhesiveness.

The laminate was inserted into an aluminum laminated film pack, and hot press (dry heat press) was performed in the lamination direction of the laminate together with pack using a hot press machine, thereby bonding the electrode to the separator. The conditions in the hot press were a temperature of 85°C, a pressure of 1 MPa, and a time of 0.5 minutes. After the hot press, the laminate was taken out from the pack, and the release paper was peeled off to obtain a test piece for dry adhesiveness.

The non-coating surface of the electrode of the test piece was fixed to a metal plate using a double-sided tape, and the metal plate was fixed to a lower chuck of TENSILON (STB-1225S, manufactured by A&D Company, Limited). At this time, the metal plate was fixed to the TENSILON such that the length direction of the test piece (that is, MD of the separator) was the direction of gravity. The separator was peeled off from the electrode by about 2 cm from a lower end, the end was fixed to an upper chuck, and a 180° peel test was performed. A tensile speed in the 180° peel test was set to 20 mm/min. A load (N) from 10 mm to 40 mm after the start of the measurement was sampled at an interval of 0.4 mm, and an average thereof was calculated. Further, the loads of 10 test pieces were averaged to obtain adhesive strength (N/15 mm) between the electrode and the separator.

The value (percentage) obtained by dividing the adhesive strength of each example by the adhesive strength in Example 1 was classified as follows.
A: 99% or more
B: 90% or more and less than 99%
C: 80% or more and less than 90%
D: less than 80%

### [Permeability of Electrolyte Solution]

The separator was placed on a horizontal stand, and 1 mL of an electrolyte solution (1 mol/L LiPF₆-ethylene carbonate: ethyl methyl carbonate [mass ratio: 3:7]) was added dropwise. After 10 minutes from the dropping, a diameter of the spread of the electrolyte solution was measured using a caliper.

The value (percentage) obtained by dividing the diameter of each example by the diameter in Example 1 was classified as follows.
A: 99% or more
B: 90% or more and less than 99%
C: 80% or more and less than 90%
D: less than 80%

### [Ion Permeability]

Film resistance was measured as an index of the ion permeability of the separator.

The separator was impregnated with 1 mol/L LiBF₄-propylene carbonate: ethylene carbonate (mass ratio: 1:1) as an electrolyte solution, sandwiched between aluminum foil electrodes with lead tabs, and sealed in an aluminum laminated film pack to prepare a test cell. A resistance value (Ω·cm²) of the test cell was measured by using an AC impedance method (measurement frequency: 100 kHz).

The value (percentage) obtained by dividing the film resistance of each example by the film resistance in Example 1 was classified as follows.
A: 99% or more
B: 90% or more and less than 99%
C: 80% or more and less than 90%
D: less than 80%

### <Preparation of Separator and Battery>

### [Example 1]

### -Preparation of Separator-

Dimethylacetamide (DMAc) and tripropylene glycol (TPG) were mixed at a mass ratio of 90:10 to prepare a mixed solvent. A meta-aramid (polymetaphenylene isophthalamide) and alumina particles (average primary particle diameter: 0.3 µm) were added to the mixed solvent and stirred and mixed to prepare a coating liquid (1). The meta-aramid and the alumina particles were mixed at a volume ratio of 35:65. The coating liquid (1) had a meta-aramid concentration of 5 mass%.

A resin particle dispersion liquid (1) in which acrylic resin particles (glass transition temperature: 55°C) were dispersed in water was prepared. The resin particle dispersion liquid (1) had a resin particle concentration of 7 mass%, and had an average primary particle diameter of resin particles of 500 nm.

A polyethylene microporous film (thickness: 8 µm, Gurley value: 160 s/100 mL, average pore diameter: 100 nm) was passed through a pair of Meyer bars on which an appropriate amount of the coating liquid (1) was placed, and the polyethylene microporous film was coated with an equal amount of the coating liquid (1) on both surfaces. Next, the coating layer was immersed in a coagulation liquid (DMAc:TPG:water = 38:2:60 [mass ratio], liquid temperature: 25°C) to be solidified. Next, the solidified coating layer was washed in a water washing tank having a water temperature of 25°C and dried to obtain a laminate including a heat-resistant porous layer on both surfaces of the polyethylene microporous film. Next, the laminate was passed through a pair of bar coaters on which an appropriate amount of the resin particle dispersion liquid (1) was placed, and both surfaces of the laminate was uniformly coated with the resin particle dispersion liquid (1), followed by drying. In this way, a separator in which the heat-resistant porous layer and the adhesive layer were formed on both surfaces of the polyethylene microporous film was obtained. The coverage on the surface of the separator with the acrylic resin particles was 40% on both surfaces.

### -Preparation of Positive Electrode-

Using a double-armed mixer, 89.5 parts by mass of a lithium cobalt oxide powder as a positive electrode active material, 4.5 parts by mass of acetylene black as a conductive auxiliary agent, 6 parts by mass of polyvinylidene fluoride as a binder resin, and an appropriate amount of N-methyl-2-pyrrolidone were stirred and mixed to prepare a positive electrode slurry. The positive electrode slurry was applied to both surfaces of an aluminum foil having a thickness of 20 µm, dried and then pressed to obtain a positive electrode having a positive electrode active material layer on both surfaces.

### -Preparation of Negative Electrode-

Using a double-armed mixer, 300 parts by mass of artificial graphite as a negative electrode active material, 7.5 parts by mass of a water-soluble dispersion liquid containing 40 mass% of a modified product of a styrene-butadiene copolymer as a binder resin, 3 parts by mass of carboxymethyl cellulose as a thickener, and an appropriate amount of water were stirred and mixed to prepare a negative electrode slurry. The negative electrode slurry was applied to both surfaces of a copper foil having a thickness of 10 µm, dried and then pressed to obtain a negative electrode having a negative electrode active material layer on both surfaces.

### -Preparation of Battery-

Each of the positive electrode and the negative electrode was cut into a rectangular shape of 30 mm × 50 mm, and a lead tab was welded thereto. The separator was cut into a rectangle of 35 mm in TD × 55 mm in MD. The positive electrodes and the negative electrodes were alternately laminated such that the separator was sandwiched between the positive electrode and the negative electrode, to prepare a laminated product composed of three positive electrodes, three negative electrodes, and five separators. The laminated product was inserted into an aluminum laminated film pack, an electrolyte solution (1 mol/L LiPF₆-ethylene carbonate: ethyl methyl carbonate [mass ratio: 3:7]) was injected into the pack, and the laminated product was impregnated with the electrolyte solution. Next, the laminated product together with the pack was subjected to hot press using a hot press machine in the lamination direction of the laminated product (wet heat press), thereby bonding the electrodes to the separator. The conditions in the hot press were a press temperature of 85°C, a press pressure of 1 MPa, and a press time of 5 minutes. Accordingly, a non-aqueous secondary battery was obtained.

### [Examples 2 to 13 and Comparative Examples 1 to 4]

Each separator was produced in the same manner as in Example 1 except that at least one of the polyethylene microporous film, the heat-resistant porous layer, and the adhesive layer was changed as shown in Table 1. The coverage on the surface of the separator with the resin particles was controlled based on the coating amount of the resin particle dispersion liquid. A non-aqueous secondary battery was prepared using each separator.

The abbreviations in Table 1 are as follows.
· DMAc: dimethylacetamide
· TPG: tripropylene glycol
· Acrylic: acrylic resin
· PVDF-based: polyvinylidene fluoride-based resin

**[Table 1]**

| | Porous substrate | | | Heat-resistant porous layer | | | | | | |
|---|---|---|---|---|---|---|---|---|---|---|
| | Kind | Thickness | Average pore diameter | Resin | Inorganic particles | | | Solvent mixing ratio DMAc:TPG in coating liquid | Average pore diameter X | Coating surface |
| | | | | Kind | Kind | Average primary particle diameter | Content | | | |
| | - | µm | nm | - | - | µm | vol% | - | nm | - |
| Comp. Ex. 1 | PE film | 8 | 100 | Meta-aramid | Al2O3 | 1.0 | 65 | 80:20 | 500 | Both surfaces |
| Comp. Ex. 2 | PE film | 8 | 100 | Meta-aramid | Al2O3 | 0.05 | 65 | 95:5 | 20 | Both surfaces |
| Comp. Ex. 3 | PE film | 8 | 100 | Meta-aramid | Al2O3 | 0.1 | 65 | 95:5 | 50 | Both surfaces |
| Comp. Ex. 4 | PE film | 8 | 100 | Meta-aramid | Al2O3 | 0.3 | 65 | 90:10 | 170 | Both surfaces |
| Ex. 1 | PE film | 8 | 100 | Meta-aramid | Al2O3 | 0.3 | 65 | 90:10 | 170 | Both surfaces |
| Ex. 2 | PE film | 8 | 100 | Meta-aramid | Al2O3 | 0.8 | 65 | 90:10 | 300 | Both surfaces |
| Ex. 3 | PE film | 8 | 100 | Meta-aramid | Al2O3 | 0.1 | 65 | 95:5 | 50 | Both surfaces |
| Ex. 4 | PE film | 8 | 100 | Meta-aramid | Al2O3 | 0.3 | 65 | 90:10 | 170 | Both surfaces |

| | | | | | | | | | | |
|---|---|---|---|---|---|---|---|---|---|---|
| *Ex.: Example, Comp. Ex.: Comparative Example | | | | | | | | | | |

**[Table 1] (continued)**

| | Adhesive Layer | | | | Separator | | |
|---|---|---|---|---|---|---|---|
| | Adhesive resin particles | | | Coating surface | Thickness | Gurley value | Y/X |
| | Kind of Resin | Average primary particle diameter Y | Coverage | | | | |
| | - | nm | % | - | µm | s/100 mL | - |
| Comp. Ex. 1 | Acrylic | 100 | 40 | Both surfaces | 13 | 190 | 0.2 |
| Comp. Ex. 2 | Acrylic | 500 | 40 | Both surfaces | 13 | 300 | 25 |
| Comp. Ex. 3 | Acrylic | 1200 | 40 | Both surfaces | 13 | 290 | 24 |
| Comp. Ex. 4 | Acrylic | 20 | 40 | Both surfaces | 13 | 250 | 0.1 |
| Ex. 1 | Acrylic | 500 | 40 | Both surfaces | 13 | 250 | 2.9 |
| Ex. 2 | Acrylic | 500 | 40 | Both surfaces | 13 | 220 | 1.7 |
| Ex. 3 | Acrylic | 500 | 40 | Both surfaces | 13 | 270 | 10 |
| Ex. 4 | Acrylic | 900 | 40 | Both surfaces | 13 | 260 | 5.3 |

| | | | | | | | |
|---|---|---|---|---|---|---|---|
| *Ex.: Example, Comp. Ex.: Comparative Example | | | | | | | |

**[Table 1] (continued)**

| | Porous substrate | | | Heat-resistant porous layer | | | | | | |
|---|---|---|---|---|---|---|---|---|---|---|
| | Kind | Thickness | Average pore diameter | Resin | Inorganic particles | | | Solvent mixing ratio DMAc:TPG in coating liquid | Average pore diameter X | Coating surface |
| | | | | Kind | Kind | Average primary particle diameter | Content | | | |
| | - | µm | nm | - | - | µm | vol% | - | nm | - |
| Ex. 5 | PE film | 8 | 100 | Meta-aramid | Al2O3 | 0.3 | 65 | 90:10 | 170 | Both surfaces |
| Ex. 6 | PE film | 8 | 100 | Meta-aramid | Al2O3 | 0.1 | 65 | 95:5 | 50 | Both surfaces |
| Ex. 7 | PE film | 8 | 100 | Meta-aramid | Al2O3 | 0.8 | 65 | 90:10 | 300 | Both surfaces |
| Ex. 8 | PE film | 8 | 50 | Meta-aramid | Al2O3 | 0.3 | 65 | 90:10 | 170 | Both surfaces |
| Ex. 9 | PE film | 8 | 140 | Meta-aramid | Al2O3 | 0.3 | 65 | 90:10 | 170 | Both surfaces |
| Ex. 10 | PE film | 8 | 100 | Meta-aramid | Al2O3 | 0.3 | 65 | 90:10 | 170 | Both surfaces |
| Ex. 11 | PE film | 8 | 100 | Meta-aramid | Al2O3 | 0.3 | 65 | 90:10 | 170 | Both surfaces |
| Ex. 12 | PE film | 8 | 100 | Meta-aramid | Mg(OH)2 | 0.3 | 65 | 90:10 | 170 | Both surfaces |
| Ex. 13 | PE film | 8 | 100 | Meta-aramid | BaSO4 | 0.3 | 65 | 90:10 | 170 | Both surfaces |

| | | | | | | | | | | |
|---|---|---|---|---|---|---|---|---|---|---|
| *Ex.: Example, Comp. Ex.: Comparative Example | | | | | | | | | | |

**[Table 1] (continued)**

| | Adhesive Layer | | | | Separator | | |
|---|---|---|---|---|---|---|---|
| | Adhesive resin particles | | | Coating surface | Thickness | Gurley value | Y/X |
| | Kind of Resin | Average primary particle diameter Y | Coverage | | | | |
| | - | nm | % | - | µm | s/100 mL | - |
| Ex. 5 | Acrylic | 100 | 40 | Both surfaces | 13 | 240 | 0.6 |
| Ex. 6 | Acrylic | 900 | 40 | Both surfaces | 13 | 280 | 18 |
| Ex. 7 | Acrylic | 100 | 40 | Both surfaces | 13 | 210 | 0.3 |
| Ex. 8 | Acrylic | 500 | 40 | Both surfaces | 13 | 250 | 2.9 |
| Ex. 9 | Acrylic | 500 | 40 | Both surfaces | 13 | 250 | 2.9 |
| Ex. 10 | Acrylic | 500 | 10 | Both surfaces | 13 | 230 | 2.9 |
| Ex. 11 | Acrylic | 500 | 80 | Both surfaces | 13 | 270 | 2.9 |
| Ex. 12 | PVDF-based | 500 | 40 | Both surfaces | 13 | 250 | 2.9 |
| Ex. 13 | PVDF-based | 500 | 40 | Both surfaces | 13 | 250 | 2.9 |

| | | | | | | | |
|---|---|---|---|---|---|---|---|
| *Ex.: Example, Comp. Ex.: Comparative Example | | | | | | | |

**[Table 2]**

| | Evaluation of separator performance | | | |
|---|---|---|---|---|
| | Adhesiveness to | positive electrode | Permeability of electrolyte solution | Ion permeability |
| | Wet | Dry | | |
| Comp. Ex. 1 | D | D | D | A |
| Comp. Ex. 2 | A | A | A | D |
| Comp. Ex. 3 | A | A | A | D |
| Comp. Ex. 4 | D | D | D | A |
| Ex. 1 | A | A | A | A |
| Ex. 2 | B | B | B | A |
| Ex. 3 | A | A | A | B |
| Ex. 4 | A | A | A | B |
| Ex. 5 | B | B | B | A |
| Ex. 6 | A | A | A | C |
| Ex. 7 | C | C | C | A |
| Ex. 8 | A | A | A | B |
| Ex. 9 | A | A | A | A |
| Ex. 10 | B | B | A | A |
| Ex. 11 | A | A | B | B |
| Ex. 12 | A | A | A | A |
| Ex. 13 | A | A | A | A |

All the documents, patent applications, and technical standards described in this description are incorporated in this description by reference to the same extent as if each of the documents, the patent applications, and the technical standards were specifically and individually indicated to be incorporated herein by reference.

The disclosure of Japanese Patent Application No. 2024-045643 filed on March 21, 2024 is all incorporated herein by reference.

### Reference Signs List

- 10A, 10B, 10C, 10D, 10E:: separator
- 20:: porous substrate
- 30:: heat-resistant porous layer
- 40:: laminate
- 50:: adhesive layer
- 52:: adhesive resin particles

## Claims

1. A separator for a non-aqueous secondary battery comprising:
a porous substrate;
a heat-resistant porous layer disposed on one surface or both surfaces of the porous substrate and containing inorganic particles and a binder resin; and
an adhesive layer disposed on one surface or both surfaces of a laminate including the porous substrate and the heat-resistant porous layer and containing adhesive resin particles, wherein
the heat-resistant porous layer has an average pore diameter X of 50 nm to 300 nm, and
the adhesive resin particles have an average primary particle diameter Y of 100 nm to 900 nm.

2. The separator for a non-aqueous secondary battery according to claim 1, wherein a ratio Y/X of the average primary particle diameter Y to the average pore diameter X is 2 to 10.

3. The separator for a non-aqueous secondary battery according to claim 1, wherein a coverage on a surface of the separator for a non-aqueous secondary battery with the adhesive resin particles is 10% to 80% on each of surfaces on which the adhesive layer is disposed.

4. The separator for a non-aqueous secondary battery according to claim 1, wherein the inorganic particles include at least one selected from the group consisting of metal oxide particles, metal hydroxide particles, and metal sulfate particles.

5. The separator for a non-aqueous secondary battery according to claim 1, wherein the binder resin includes at least one selected from the group consisting of a wholly aromatic polyamide, a polyimide, a polyamideimide, a fluorine-based resin, and an acrylic resin.

6. The separator for a non-aqueous secondary battery according to claim 1, wherein the adhesive resin particles include at least one selected from the group consisting of acrylic resin particles, polyvinylidene fluoride-based resin particles, and styrene-butadiene rubber particles.

7. The separator for a non-aqueous secondary battery according to claim 1, wherein the porous substrate has an average pore diameter of 50 nm to 140 nm.

8. The separator for a non-aqueous secondary battery according to claim 1, wherein the porous substrate is a polyolefin microporous film.

9. A non-aqueous secondary battery that obtains an electromotive force by doping and de-doping a lithium ion, the non-aqueous secondary battery comprising:
a positive electrode;
a negative electrode; and
the separator for a non-aqueous secondary battery according to any one of claims 1 to 8 disposed between the positive electrode and the negative electrode.
